# EUROPÄISCHE PATENTANMELDUNG

(11) **EP 2 455 205 A2**
(43) Veröffentlichungstag der Anmeldung: **23.05.2012**
(21) Anmeldenummer: 11009251.7
(22) Anmeldetag: 22.11.2011
(51) Int. Cl.: B29C 44/12, B29C 44/38

(54) **Sichtbauteil, Verfahren zu dessen Herstellung sowie Schäumwerkzeug zum Durchführen des Verfahrens**

(30) Priorität: 22.11.2010 DE 102010051700
(71) Anmelder: EDAG GmbH & Co. KGaA, 36039 Fulda (DE)
(72) Erfinder: Schäfer, Uwe, 36088 Hünfeld-Malges (DE)
(74) Vertreter: Weidner, Ulrich

(57) **Zusammenfassung**

Die Erfindung betrifft ein Sichtbauteil, insbesondere für die Interieurgestaltung von Fahrzeugen, wobei die Sichtbauteile in höchster Oberflächenqualität und edler Optik gestaltet und konsequent nach dem Leichtbauprinzip ausgebildet sind. Zum Verbau der Sichtbauteile ist es notwendig, an deren Rückseiten nachträglich Befestigungs- und Ausrichtelemente (3) auszubilden. Erfindungsgemäß werden diese aus einem PU-System angeschäumt, ohne dass sie Bestandteil einer flächigen PU-Beschichtung auf der Rückseite des Sichtbauteils sind. Durch den Wegfall der flächigen PU-Beschichtung kommt es zu keinem Wärmeverzug am fertigen Sichtbauteil, so dass kein Einsatz von abrasiven Füllstoffen, wie zum Beispiel Verstärkungsfasern, notwendig ist. Auf diese Weise ist es möglich, Sichtbauteil-Halbzeuge mit abschließend behandelten Oberflächen in so genannter Class-A-Qualität einzusetzen.

## Beschreibung

Die Erfindung betrifft ein Sichtbauteil, insbesondere für die Interieurgestaltung von Fahrzeugen, wobei die Sichtbauteile in höchster Oberflächenqualität und edler Optik gestaltet und konsequent nach dem Leichtbauprinzip ausgebildet sind. Das bedeutet, dass solche Bauteile nur im Sichtbereich aus dem den optischen Eindruck vermittelnden Material gefertigt sind. Derartige Sichtbauteile können zum Beispiel Carbonfaserverbundbauteile, welche durch schichtweises Einbetten (Laminieren) eines Kohlenstofffasergewebes in einer Matrix aus aushärtendem Kunstharz hergestellt werden oder aber auch Echtholzapplikationen sein.

### Stand der Technik

Im Fahrzeugbau ist sehr verbreitet, Sichtbauteile als Carbonfaserverbundbauteile zu realisieren. Wesentliche Vorteile von Carbonfaserverbundbauteilen sind die hohe Zug- und Schwingungsfestigkeit, die geringe Wärmeausdehnung, eine gute Korrosionsbeständigkeit sowie das im Vergleich zu anderen Werkstoffen geringe Gewicht. Während vor einigen Jahren im Mesentlichen nur Fahrzeuge in Einzelanfertigung, zum Beispiel für den Motorsport, derartige Bauteile aufwiesen, werden heute Carbonfaserverbundbauteile, insbesondere auch wegen ihr edlen Optik, zunehmend im Bereich des Interieurs von Serienfahrzeugen eingesetzt.

Speziell bei Carbonfaserverbundbauteilen für den Fahrzeugbau wird die spätere Sichtfläche schon beim Laminiervorgang in einer hohen oberflächenqualität erzeugt. Dazu erfolgt das Laminieren in einer der geforderten Oberflächenqualität entsprechend gefertigten offenen Negativform. Die schon beim Laminiervorgang erzeugte qualitativ hochwertige Oberfläche wird durch zusätzliche Lackaufträge oder Poliervorgänge weiter veredelt.

Bei der Serienfertigung derartiger Carbonfaserverbundbauteile sowie bei deren serienmäßigem Verbau kommt es jedoch in der Praxis zu Problemen. Durch den Prozess des Laminierens in einer offenen Form bedingt, weisen die gattungsgemäßen Carbonfaserverbundbauteile eine geometrisch und maßlich nicht definierte Rückseite auf. Auch ist das Ausbilden von entsprechend exakt angeordneten Ausricht-, Handling- und Befestigungselementen während des Laminierprozesses in einer Serienfertigung nicht zufrieden stellend gelöst.

Das aufwändige nachträgliche Anordnen von großflächigen und zum Teil metallischen Befestigungselementen an der Rückseite lässt den ursprünglichen Gewichtsvorteil teilweise wieder schwinden. Das trifft auch auf gattungsgemäße Sichtbauteile aus anderen Materialien, wie zum Beispiel Echtholz, zu.

Um die geschilderten Nachteile des Standes der Technik zu vermeiden, wurde in der DE 10 2008 007 879 A1 eine Lösung vorgeschlagen, bei welcher ein gattungsgemäßes, die Sichtseite bildendes Carbonfaserverbundbauteil auf seiner Rückseite eine Schicht aus einem faserverstärkten reaktiven PU-System aufweist. Dazu wird auf die Rückseite des in Laminiertechnik vorgefertigten Carbonfaserverbundbauteils mittels Sprühauftrag ein faserverstärktes PU-System aufgetragen welches in einem zweiteiligen Presswerkzeug unter Druck aushärtet. Durch das Herstellen dieser rückseitigen PU-Schicht in einem schließbaren Presswerkzeug erhält man eine geometrisch und maßlich exakt definierte Rückseite des Carbonfaserverbundbauteils. Durch das entsprechende Ausbilden des Werkzeugoberteils können Ausricht-, Handhabungs- oder Befestigungselemente erzeugt werden.

Obwohl ein Carbonfaserverbundbauteil schon die geforderte Festigkeit und Stabilität aufweist, muss bei dieser Technologie die rückseitige PU-Schicht faserverstärkt ausgebildet sein. Nur so wird ein unzulässiger Teileverzug aufgrund des unterschiedlichen Wärmeausdehnungsverhaltens von Carbon und PU-System vermieden. Ein so genanntes werkzeugfallendes Herstellen ist mit dieser Lösung jedoch nicht möglich, da nach der Entnahme des Bauteils aus dem Presswerkzeug noch ein spanendes Entfernen des überschüssigen Laminatrandes erfolgen muss. Ein weiterer Nachteil dieser Technologie ist jedoch die Notwendigkeit des Einsatzes eines faserverstärktem PU-Systems an sich. Durch die sich auch an den Oberflächen des Werkzeuges und des Bauteils anlagernden Faserpartikel können die Carbonfaserverbundbauteile erst nach dem Aufbringen des faserverstärkten PU-Systems und nach entsprechender Reinigung ihr Oberflächenfinish bekommen. Die Faserpartikel würden die fertigen veredelten Oberflächen sonst beschädigen. Der eigentliche Vorteil von Carbonfaserverbundbauteilen, das geringe Gewicht bei hoher Festigkeit, wird durch die ganzflächige, faserverstärkte PU-Schicht teilweise wieder aufgehoben.

### Aufgabenstellung

Es ist daher Aufgabe der Erfindungen, Lösungen zu schaffen, mit welchen gattungsgemäße Sichtbauteile bei Meidung der aus dem Stand der Technik bekannten Nachteile kostengünstig und serientauglich herstellbar sind. Insbesondere sollen Sichtbauteile, deren sichtbare Oberflächen schon mit einem in höchster Qualität versehenen Oberflächenfinish versehen sind, rückseitig mit Befestigungs- und Ausrichtelementen aus einem faserfreien PU-System versehen werden.

Diese Aufgabe wird durch Lösungen mit den Merkmalen der Patentansprüche 1, 3 und 4 gelöst. Vorteilhafte Ausgestaltungen der Erfindungen sind in den jeweiligen Unteransprüchen angegeben.

Die Vorteile der Erfindungen bestehen insbesondere darin, dass durch das nur partielle Anordnen von Befestigungs-und Ausrichtelementen aus kompaktem, angehäuften PU-System ein Wärmeverzug des fertigen Sichtbauteils verhindert wird. Da beim Erzeugen der Befestigungs- und Ausrichtelemente aus kompaktem PU-System keine abrasiven Füllstoffe eingesetzt werden müssen, ist es möglich Sichtbauteil-Halbzeuge mit abschließend behandelten Oberflächen in so genannter Class-A-Qualität einzusetzen. Das Verbinden von mehreren, im jeweiligen Werkzeugteil zum Erzeugen der Befestigung- und Ausrichtelemente ausgebildeten Formhohlräume durch das Ausbilden von PU-Schäumkanälen, in Verbindung mit den das definierte Ausbreiten des PU-Systems gewährleistenden elastischen Dichtungen, ermöglicht eine konstruktiv und baulich günstige und damit Kosten sparende Ausbildung der Schäumwerkzeuge. Durch den Einsatz von hohlen, mit einem druckbeaufschlagten Medium befüllbaren Dichtungen können auf der Rückseite des Sichtbauteils vorhandene Unebenheiten vorteilhaft ausgeglichen werden.

Ein wesentlicher Vorteil besteht weiterhin darin, dass nur noch die Sichtbauteil-Halbzeuge mit Befestigungs- und Ausrichtelementen versehen werden müssen, die schon positiv einer Qualitätsprüfung unterzogen wurden.

### Ausführungsbeispiele

Ausführungsbeispiele der Erfindungen werden im Folgenden näher beschrieben:

Es zeigen:
- Fig. 1: die Vorderseite eines Sichtbauteils
- Fig. 2: die Rückseite eines Sichtbauteils
- Fig. 3: eine vergrößerte Einzelheit im Bereich der Schnittlegung nach Figur 2
- Fig. 4: ein fertiges Sichtbauteil nach Schnitt A-A
- Fig. 5: ein fertiges Sichtbauteil nach Schnitt B-B
- Fig. 6 bis 13: Prinzipdarstellungen des Schäumwerkzeuges in den einzelnen Verfahrensstufen

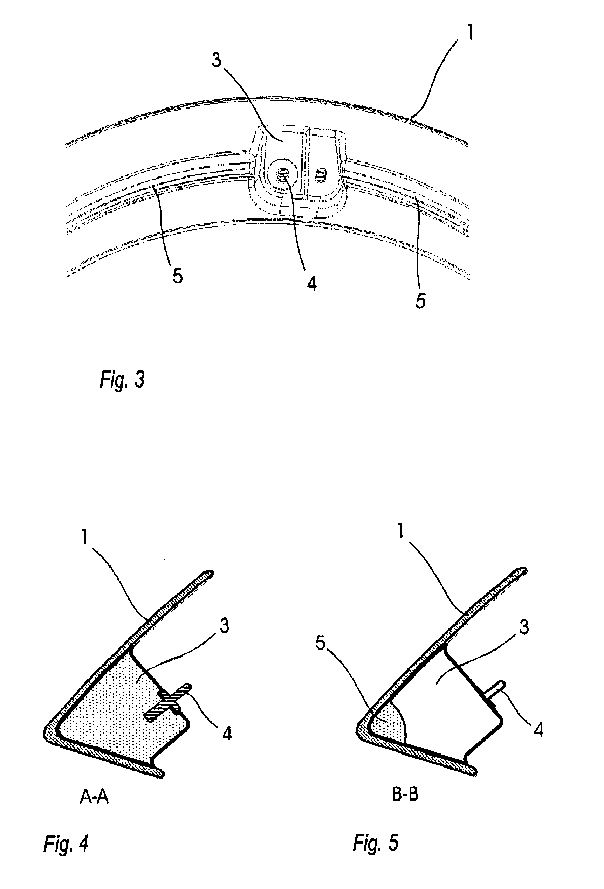

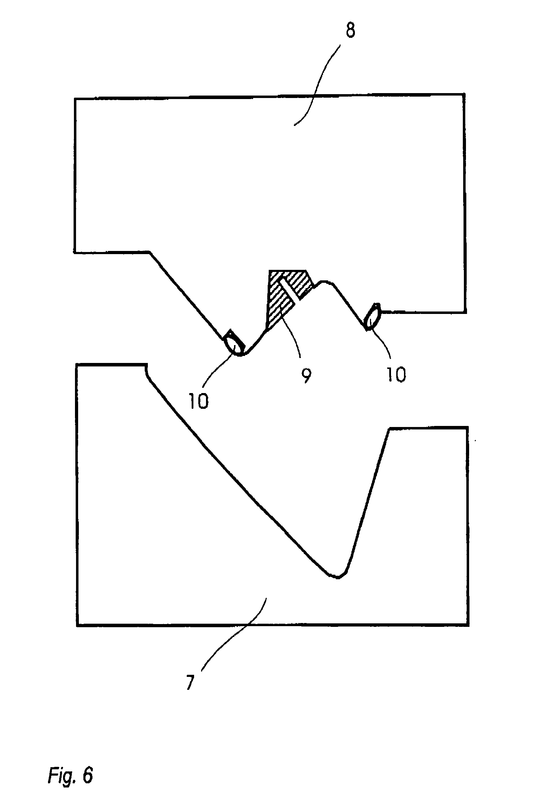

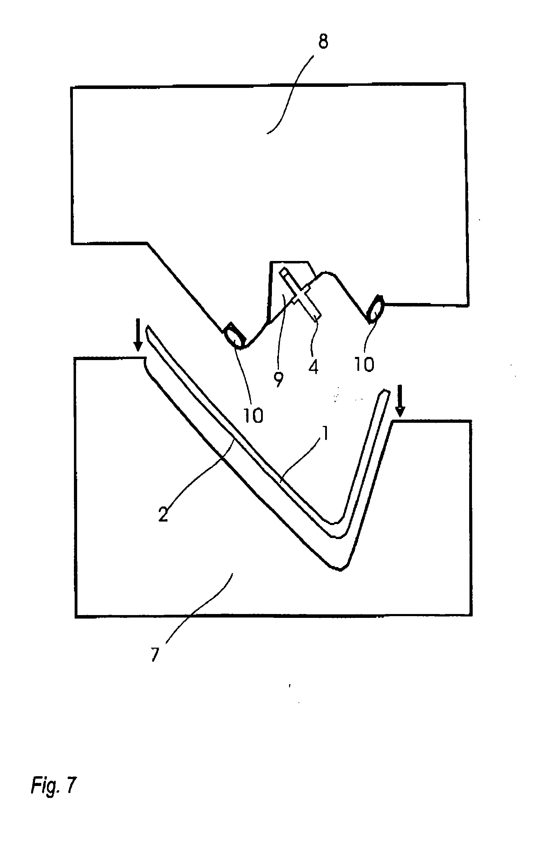

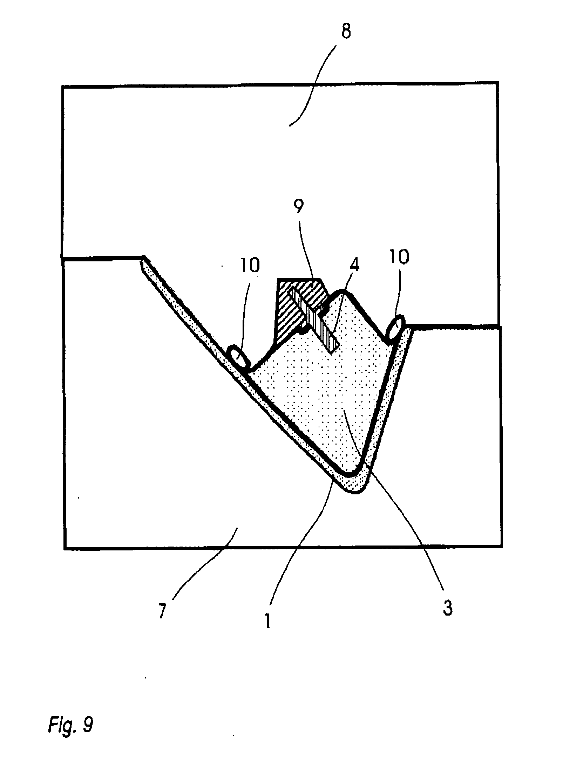

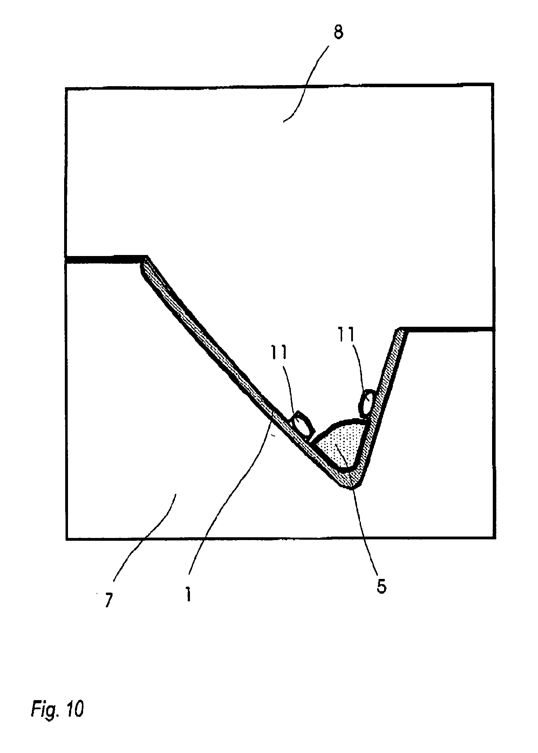

Insbesondere bei den Figuren 4 bis 13 handelt es sich um vereinfachte Darstellungen im Bereich der jeweiligen Schnittebene. Aus Gründen der Übersichtlichkeit wurde in den Figuren 6 bis 13 auf eine Schraffur der im Schnitt dargestellten Werkzeughälften verzichtet.

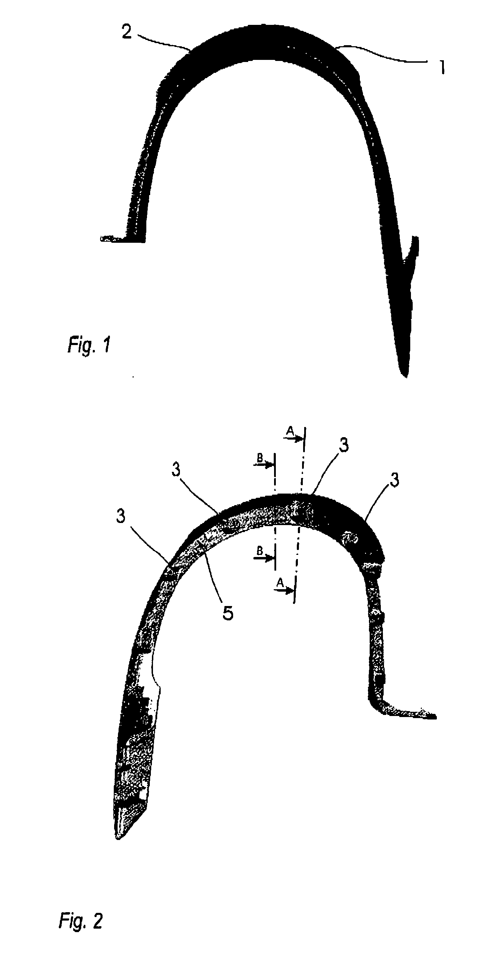

Das Sichtbauteil 1 besteht aus einem in bekannter Weise durch Laminieren hergestellten schalenförmigen Carbonfaserhalbzeug in Carbon-Optik und weist eine in hoher Oberflächenqualität gefertigte, abschließend lackierte und geprüfte Sichtfläche 2 auf. Auf der Rückseite des Sichtbauteils 1 sind partiell einzelne Befestigungs- und Ausrichtelemente 3 aus einer Anhäufung von kompaktem, nicht faserverstärktem PU-System ausgebildet. Die einzelnen Befestigungs- und Ausrichtelemente 3 sind dabei nur durch eine auf der Rückseite des Sichtbauteils 1 verlaufende dünne PU-Ader 5 verbunden (Fig. 2 u. 3). Die Rückseite des Sichtbauteils 1 weist ansonsten keine flächige Beschichtung aus einem PU-System auf.

Der Schnitt A-A in Figur 2 verläuft durch ein Befestigungs- und Ausrichtelement 3 im Bereich des eingeschäumtem Befestigungsbolzens 4 (Fig. 4). Der Schnitt B-B in Figur 5 verläuft dagegen vor dem Befestigungs- und Ausrichtelement 3 durch die PU-Ader 5.

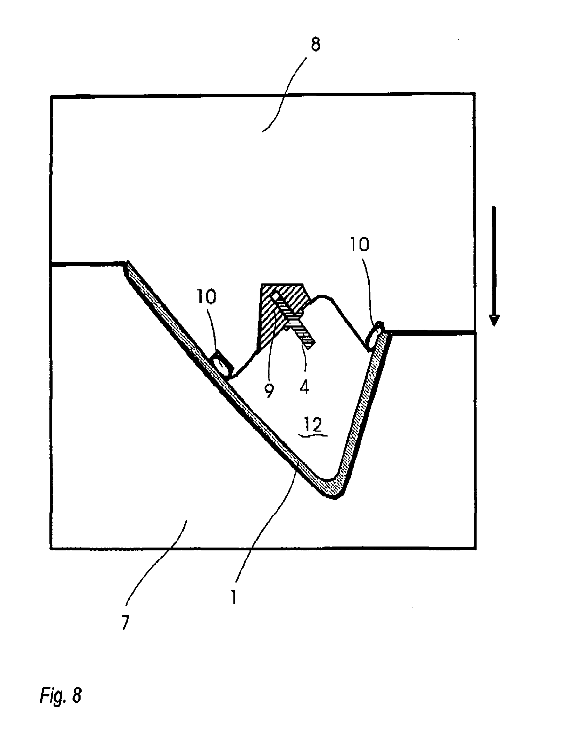

Die einzelnen aus kompaktem PU-System bestehenden Befestigungs- und Ausrichtelemente 3 werden auf der Rückseite des Sichtbauteils 1 durch Initiieren eines reaktiven PU-Systems in ein geschlossenes, aus Unterwerkzeug 7 und Oberwerkzeug 8 bestehendes Schäumwerkzeug erzeugt. Dabei gelangt das initiierte PU-System von einem nicht dargestellten Anguss über zwischen dem Unterwerkzeug 7 und dem Oberwerkzeug 8 gebildete PU-Schäumkanäle in mehrere zwischen dem Unterwerkzeug 7 und dem Oberwerkzeug 8 zum Ausbilden einzelner Befestigungs- und Ausrichtelemente 3 ausgebildete Formhohlräume 12 (Fig. 8). Ein Ausbreiten des PU-Systems auf der Rückseite des Sichtbauteils 1 über die Kontur der Befestigungs- und Ausrichtelemente 3 sowie der PU-Adern 5 hinaus wird durch im Oberwerkzeug 8 angeordnete elastische Dichtungen 10 und 11, welche die Formhohlräume 12 und die PU-Schäumkanäle gegen die Rückseite des Sichtbauteils 1 abdichten, verhindert. Dabei dichten die Dichtungen 10 die Formhohlräume 12 und die Dichtungen 11 die PU-Schäumkanäle ab. Der im Losteil 9 eingesetzte Befestigungsbolzen 4 wird dabei im Befestigungs- und Ausrichtteil 3 eingeschäumt. Nach dem Aushärten des PU-Systems erfolgt das Öffnen des Schäumwerkzeuges, wobei das Losteil 9 sich aus dem Oberwerkzeug 8 löst

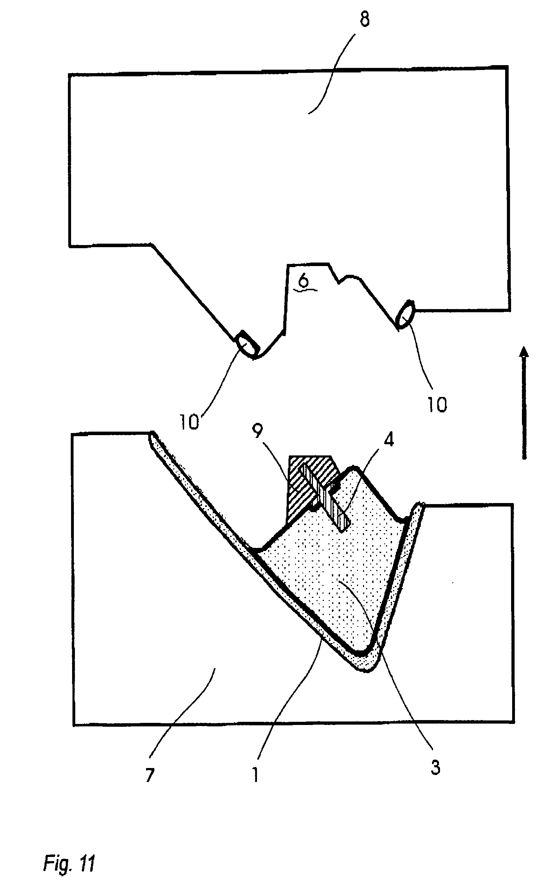

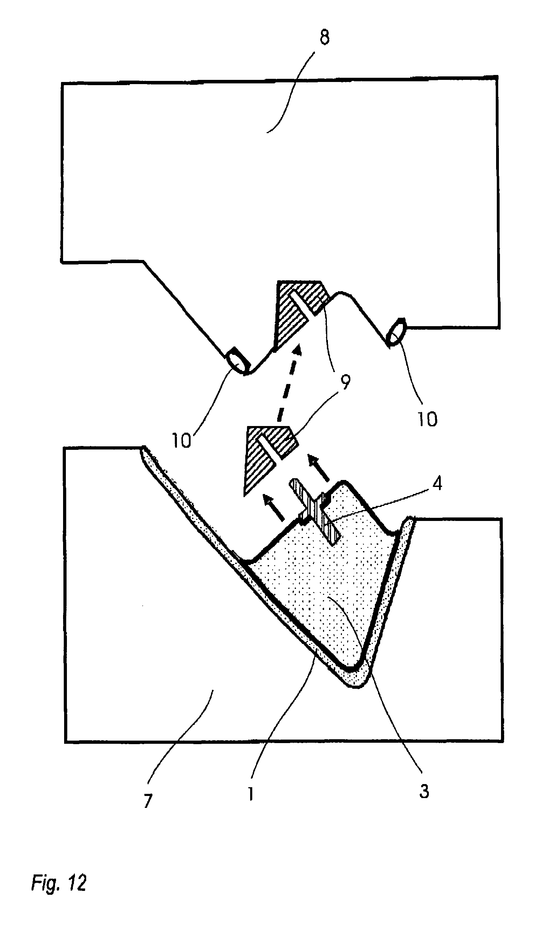

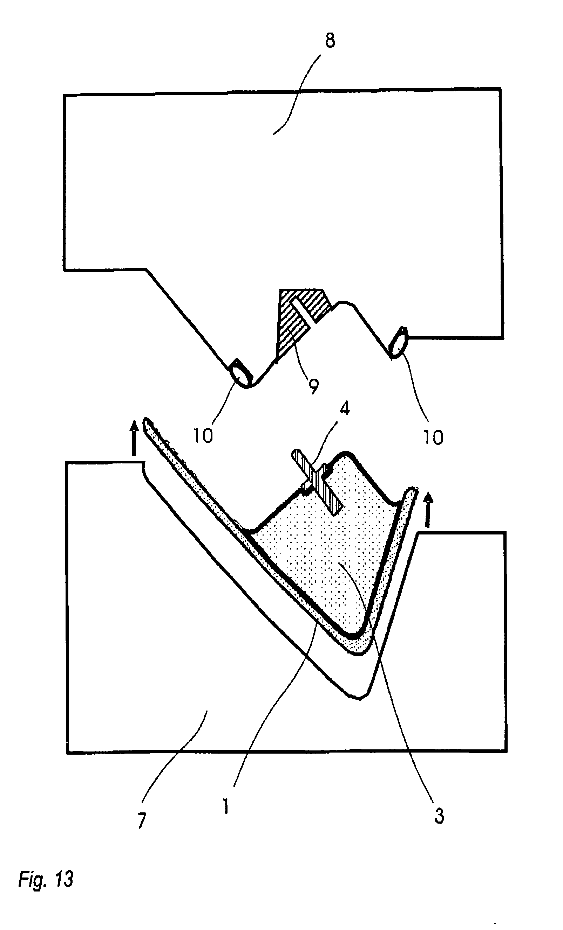

(Fig. 11). Das Losteil 9 wird nun vom Befestigungsbolzen 4 abgezogen und wieder in die Losteilaufnahme 6 im Oberwerkzeug 8 eingesetzt (Fig. 12). Das fertige Sichtbauteil 1 kann nun dem Unterwerkzeug 7 entnommen werden (Fig. 13).

### Bezugszeiehenliste

- 1: Sichtbauteil
- 2: Sichtfläche
- 3: Befestigungs- und Ausrichtelement
- 4: Befestigungsbolzen
- 5: PU-Ader
- 6: Losteilaufnahme
- 7: Unterwerkzeug
- 8: Oberwerkzeug
- 9: Losteil
- 10: Dichtung
- 11: Dichtung
- 12: Formhohlraum

## Patentansprüche

1. Sichtbauteil mit einem Sichtteil und an der Rückseite des Sichtteils aus einem reaktiven PU-System angeschäumten Befestigungs- und Ausrichtelementen, **dadurch gekennzeichnet, dass** die Rückseite des Sichtbauteils (1) keine flächige PU-Beschichtung aufweist und die einzelnen Befestigungs- und Ausrichtelemente (3) nur durch PU-Adern (5) miteinander verbunden auf der Rückseite des Sichtbauteils 1 angeschäumt sind.

2. Sichtbauteil nach Patentanspruch 1, **dadurch gekennzeichnet, dass** das PU-System keine Verstärkungsfasern oder andere abrasive Füllstoffe aufweist.

3. Verfahren zum Herstellen eines Sichtbauteils mit einem Sichtteil und an der Rückseite des Sichtteils aus einem reaktiven PU-System angeschäumten Befestigungs-und Ausrichtelementen, **dadurch gekennzeichnet, dass** das Sichtbauteil (1) mit seiner endbearbeiteten Sichtfläche (2) in ein Unterwerkzeug (7) eines schließbaren Schäumwerkzeuges eingelegt wird, die einzelnen Befestigungs- und Ausrichtelemente (3) im geschlossenen Schäumwerkzeug durch Initiieren eines PU-Systems angeschäumt werden, wobei das Initiieren des PU-Systems in mehrere Formhohlräume (12) gleichzeitig über die Formhohlräume (12) verbindende PU-Schäumkanäle erfolgt.

4. Schäumwerkzeug zum Herstellen eines Sichtbauteils mit einem Sichtteil und an der Rückseite des Sichtteils aus einem reaktiven PU-System angeschäumten Befestigungs- und Ausrichtelementen, **dadurch gekennzeichnet, dass** das Schäumwerkzeug aus einem die Sichtfläche (2) des Sichtbauteils (1) aufnehmenden Unterwerkzeug (7) und einem Formhohlräume (12) aufweisenden Oberwerkzeug (8) besteht, wobei mehrere Formhohlräume (12) durch zwischen dem Unterwerkzeug (7) und dem Oberwerkzeug (8) gebildete PU-Schäumkanäle untereinander und mit einem gemeinsamen Anguss verbunden sind, und dass zum Abdichten der Formhohlräume (12) und der gebildeten PU-Schäumkanäle gegenüber der Rückseite des Sichtbauteils (1) am Oberwerkzeug (8) elastische Dichtungen (10, 11) angeordnet sind.

5. Schäumwerkzeug nach Patentanspruch 4, **dadurch gekennzeichnet, dass** die Dichtungen (10,11) hohl ausgebildet sind und mit einem druckbeaufschlagten Medium befüllbar sind.
